# EUROPEAN PATENT SPECIFICATION

(11) **EP 0 980 990 B1**
(45) Date of publication and mention of the grant of the patent: **27.10.2004**
(21) Application number: 98306479.1
(22) Date of filing: 14.08.1998
(51) Int. Cl.: F16F 13/10

(54) **Liquid sealed type elastic mount device**
Flüssigkeitsabgedichtete, elastische Lagerungsvorrichtung
Dispositif élastique de support de type étanche à liquide

(43) Date of publication of application: 23.02.2000
(73) Proprietor: YAMASHITA RUBBER KABUSHIKI KAISHA, Iruma-Gun, Saitama (JP)
(72) Inventor: Satori, Kazutoshi, Ohi-machi, Iruma-gun, Saitama (JP); Ninakawa, Osamu, Ohi-machi, Iruma-gun, Saitama (JP)
(74) Representative: Leale, Robin George

(56) References cited:
- EP-A- 0 271 894
- EP-A- 0 534 124
- DE-A- 4 036 517
- DE-U- 8 623 498
- US-A- 5 772 189
- PATENT ABSTRACTS OF JAPAN vol. 009, no. 256 (M-421), 15 October 1985 & JP 60 104824 A (HONDA GIKEN KOGYO KK), 10 June 1985

## Description

This invention relates to a liquid sealed type elastic mount device such as an engine mount for an automotive vehicle.

Such a liquid sealed type elastic mount device is disclosed for example in Japanese Patent Publication (Kokoku) No. Sho 62-23178 (GB-A-2 055 172, Fig.4), on which the precharacterising part of claim 1 is based, comprising a first support member for attachment to a vibration source, a cylindrical shaped second support member for attachment to a vehicle body, a conical shaped rubber body interposed between the two support members, and a liquid chamber formed within the rubber body to receive buffering liquid therein, wherein a thin wall portion is partially provided on the rubber body, a disk shaped member is provided projecting from the first support member into the second support member, an annular passage is formed between an outer peripheral portion thereof and an inner wall of the second support member, and a diaphragm is provided on a bottom portion of the second support member.

According to the above described construction, since it is aimed to damp vibrations by means of flow resistance, the device can deal with vibrations in the region of 10 Hz. However, it starts to have a high dynamic spring characteristic in a medium frequency range of for example 100 to 500 HZ and in a high frequency range of for example 500 to 1000 HZ.

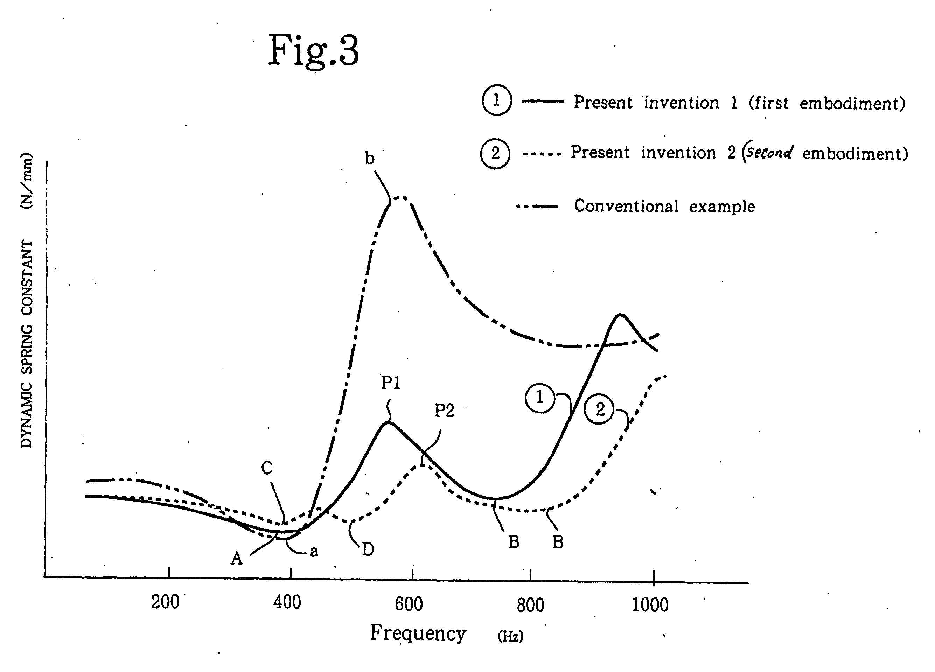

On the other hand, it is known that the rubber wall of the liquid chamber is not provided with such a thin portion and is formed with a uniform thickness in the circumferential direction, and a disk shaped member, which is connected to a vibration input side and projects into the liquid chamber, is provided, whereby a low dynamic spring characteristic is realized. A curve shown as a conventional example in Fig. 3 illustrates the change of the dynamic spring characteristics versus the frequency in such a construction. In such a liquid sealed type mount device, the disk shaped member acts as a medium frequency device and a minimum value a is generated by liquid column resonance at a specified frequency in the medium frequency range, accompanied by a flow of liquid in a gap between the peripheral rubber wall and the disk shaped member.

However, even if the dynamic spring constant becomes low in the medium frequency range, a peak b shows a reaction of the low dynamic spring constant in a somewhat higher frequency, which results in a high dynamic spring constant in the high frequency range. In recent years it is a requirement that if there is a low dynamic spring constant in a low frequency range, it is also required that the dynamic spring characteristic is made lower not only in the medium frequency range but also in the high frequency range, and a low dynamic spring characteristic is thus realized in a wide frequency range.

According to the present invention there is provided a liquid sealed type elastic mount device comprising:
a first support member for attachment to a vibration source;
a second support member for attachment to a vehicle body;
an elastic member of substantially conical shape interposed between the said first and second support members, the first support member and second support member being adapted to form a liquid chamber therebetween with at least a part of a wall thereof, and a thin wall portion being formed on a part of a conical portion of the elastic member;
a partition wall dividing the liquid chamber into a main liquid chamber and an auxiliary liquid chamber;
an orifice passage formed within the partition wall for normally communicating the two liquid chambers;
part of the wall defining said auxiliary liquid chamber being formed as a diaphragm;
a medium to high frequency device attached to the said first support member and projecting into the main liquid chamber so as to absorb a vibration component of medium to high frequency by forming a flow space between itself and the inner wall of the conical portion of the elastic member, the thin wall portion being formed on the part of the conical portion of the said elastic member adjacent to the medium to high frequency device so as to generate membrane resonance via vibration input in the medium to high frequency range.

As shown in characteristic curve 1 of Fig. 3, in response to a vibration input in the medium to high frequency region, at first, in a medium frequency range the thin wall portion of the elastic member generates membrane resonance to yield a minimum value A for the dynamic spring characteristic. The medium to high frequency device yields a minimum value B for the dynamic characteristic in the high frequency range by liquid column resonance accompanied by liquid flow in a gap between the medium to high frequency device and the thin wall portion. Therefore, the dynamic spring characteristic can be lowered in both the medium and high frequency ranges, and hence a low dynamic spring constant is achieved in a wide range spreading over the medium to high frequency.

By the membrane resonance we mean a resonance phenomenon of an elastic membrane which is generated when the thin wall portion of the elastic member deforms resiliently with a spring property as a result of liquid flow within the liquid chamber. By medium frequency range we mean particularly (but not exclusively) the 100 to 500 Hz region in the usual medium frequency range of 40 to 500 Hz.

A said thin wall portion may be provided at more than one position and such thin wall portions can then be arranged in symmetrical positions and be of the same shape.

When more than one thin wall portion of the same shape are provided and are arranged at symmetrical positions, then as shown by the characteristic curve 1, a single minimum value A can be achieved.

Alternatively a said thin wall portion may be provided at more than one position and such thin wall portions can then be arranged in symmetrical positions but be of different shapes.

When more than one thin wall portion of different shapes are provided and are arranged at symmetrical positions, then as shown by the characteristic curve 2, a plurality of minimum values of membrane resonance can be achieved as at C and D.

The said medium to high frequency device may be of a non-circular shape with a cut out portion adjacent to the said thin wall portion in a peripheral part thereof as viewed in the principal input direction of a vibration, a gap being provided between the said cut out portion and the said thin wall portion which is larger than at other locations.

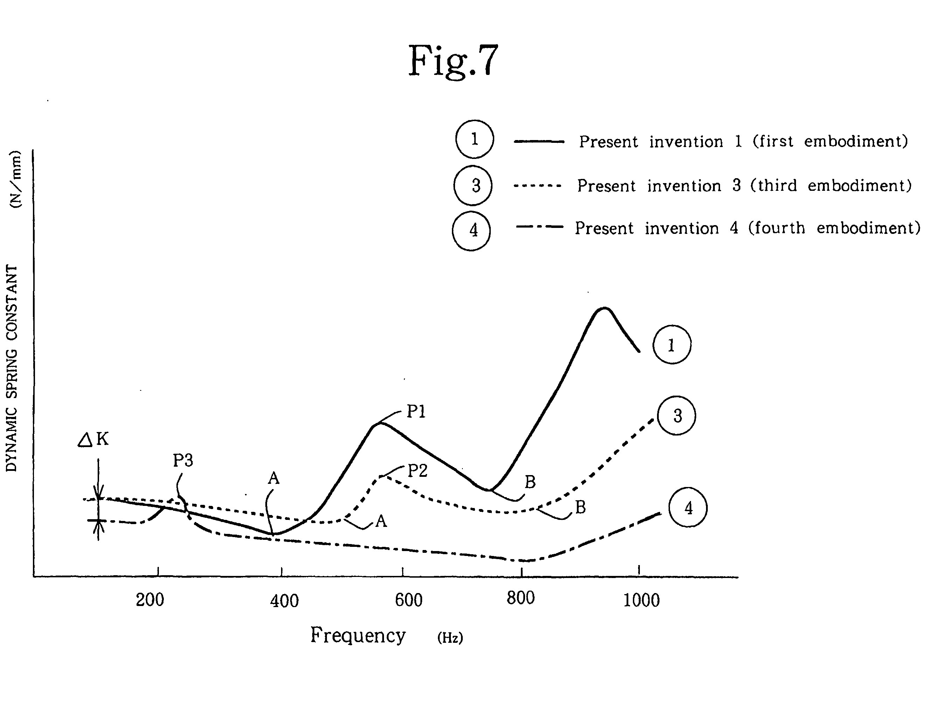

When the medium to high frequency device is formed in a non-circular shape as viewed from a principal input direction of the vibration, and a gap between the thin wall portion and the medium to high frequency device is made to be larger than that in other circumferential portions, resonance frequency of the liquid column resonance by the medium to high frequency device becomes high and the minimum value B becomes further removed from the minimum value A as shown in characteristic curve 3 of Fig. 7. As a consequence, because a peak value P2 of the dynamic spring constant between minimum values A and B is reduced to lower than the peak value PI of the characteristic curve 1, the dynamic spring constant can be lower over the entire frequency range.

The said partition wall may be an elastic partition wall arranged to change the dynamic spring characteristic thereof according to an inner pressure change in the liquid chamber.

By constructing the partition wall as a elastic partition wall and thereby changing the dynamic spring characteristic according to the change of an inner pressure in a liquid chamber, in addition to absorption of the inner pressure via an elastic deformation of the elastic partition wall, the elastic partition wall itself is made to change the dynamic spring characteristic in response to the frequency and to membrane resonate in a natural resonance frequency. When this construction is combined with the construction having the thin wall portion of the elastic member and the medium to high frequency device, then since the membrane resonance between the elastic partition wall and the thin wall portion and the liquid column resonance generated by the medium to high frequency device are complicated, as shown by the characteristic curve 4 in FIG. 7, the minimum values and peaks are made even and lowering of the dynamic spring is still more significantly achieved over the whole frequency range.

Instead of said partition wall an elasticity control mechanism may be provided, with a plurality of orifice passages having different properties to switch at designated frequencies.

If instead of the partition wall, a plurality of orifice passages having different properties are arranged to change at designated frequencies, an equal dynamic spring constant can be realized at optional designated frequencies such as the idling region, in addition to achieving a low dynamic spring constant over almost the entire frequency range from the low frequency range to the high frequency range.

The device may further comprise an opening and closing portion for switching the said orifice passages formed on a part of a diaphragm comprising an auxiliary chamber, a driving portion to open and close the said opening and closing portions, and wherein a cylindrical metal covering member is provided to cover a periphery of an elastic member, having on an open end thereof first and a second claws of different heights, a first caulking portion fixing the partition wall and the diaphragm by caulking with the said first claw, and a second caulking portion fixing a driving portion by caulking with the said second claw.

Because the auxiliary chamber side in which the liquid is sealed and the driving portion which actuates the opening and closing valve are separated and are arranged to be fixed independently in a different process, it is reliably prevented that the sealed liquid invades into the driving portion side and reaches the pivotal driving portion, and hence the quality of the product can be improved and at the same time the assembly process can be made easier.

Moreover, if the driving portion is eliminated and the partition wall side is changed to a general partition wall formed with a single orifice passage or said elastic partition wall construction, because the liquid sealed rubber mount construction can be obtained, the parts may be used in common for various purposes.

Further, if the liquid sealed portion of the diaphragm side and the driving portion are individually secured by first and second caulking portions made of two kinds of claw provided on the cylindrical covering member, the number of parts can be decreased and the fixing and assembling process of the device can be simplified.

The driving portion may comprise a top portion abutting against the said opening and closing portion, a cylindrical membrane member integrated at an end thereof with an outer peripheral portion of the said top portion to allow movement of the top portion, a fixing ring integrated with another end of the membrane portion, and a cup-like member fitted to the fixing ring, wherein to the cylindrical covering member a positioning ring is provided to fix an end thereof by a first caulking portion, and an tip portion of this positioning ring is abutted against a part of the ring portion elastic member covering the fixing ring after being inserted into the said cup-like member, an opening edge portion of the said cup-like member being fixed by a second caulking portion so that a gap is formed between the opening edge portion of the cup-like member and the first caulking portion.

If one end of the positioning ring, the other end of which is fixed to the cylindrical covering member, is abutted against a part of the ring portion elastic member covering the fixing ring to fix the driving portion by the first caulking portion, and a gap is made between the opening edge portion of the cup-like member and the first caulking portion and the opening edge portion is fixed by the second caulking portion, dimensional tolerance in the height direction can be absorbed. Besides, the positioning ring can control the attaching position of the driving portion to the auxiliary chamber. Therefore, the dimension management and the assembly process becomes easier and working costs can be reduced.

Preferably the said fixing ring has a small diameter portion and a large diameter portion, a gap is formed between an outer peripheral face of the large diameter portion and an inner peripheral face of the said cup-like member, on an outer peripheral portion of the small diameter portion an outer periphery covering portion is provided which is formed by a part of the ring portion elastic member and contacted with an inner peripheral face of the cup-like member, a first seal lip projecting from the outer periphery covering portion and pressed against an inner peripheral face of the cup-like member, and a second seal lip projecting from the ring portion elastic member close to an end portion of the fixing ring and pressed against a bottom portion of the cup-like member.

Since there is a gap between the large diameter portion of the fixing ring and the inner peripheral face of the cup-like member, an investment in press facilities can be reduced as a result of decreasing the pressing load, and dimensional tolerance in a radial direction can be absorbed. Hence the dimension management and the assembly process becomes easier and the cost of working can be decreased.

Furthermore, because the outer periphery covering portion which is formed by a part of the ring portion elastic member, is provided on the outer periphery of the small diameter portion of the fixing ring and is contacted on the inner peripheral face of the cup-like member, and the first seal lip which is pressed against the outer periphery covering portion and the inner peripheral face of the cup-like member and the second seal lip which is pressed against the ring portion elastic member close to an end portion of the fixing ring and the bottom portion of the cup-like member are provided, this results in a double seal construction, whereby air-tightness in the driving portion can be increased and the precision of the operation can be improved.

On a part of the positioning ring a small diameter portion may be provided to form an entire circumferential gap between the inner peripheral face of the said cup-like member and through the gap an atmosphere opening hole is provided in the cup-like member which communicates with a space between the diaphragm and the driving portion.

Because the air in an inner space surrounded by the diaphragm and the driving portion can be released from the atmosphere opening hole provided on the cup-like member to the atmosphere through the through hole of the small diameter portion made on a part of the positioning ring and a circumferential gap between the small diameter portion and the inner face of the cup-like member, movement of the diaphragm can be made smooth, which brings a resonance effect of the orifice into full play. Further, even if thermal expansion or contraction of the air occurs, because atmospheric pressure is reserved, an effect on the characteristics by thermal changes can be reduced and stabilized.

Furthermore, the positioning ring may be placed at any position on the cup-like metal member in a circumferential direction, which can communicate to the atmosphere opening hole through the gap. Therefore, the relative position of the positioning ring can be freely arranged relative to the cup-like metal member in the circumferential direction, and the assembling performance can thus be improved.

Some embodiments of the invention will now be described by way of example and with reference to the accompanying drawings, in which:-
Fig. 1 is a general sectional view, taken alone line 1-1 of Fig. 2, of an engine mount according to first and second embodiments of the invention;
Fig. 2 is a diagrammatic plan view of an elastic member;
Fig. 3 is a graph of the dynamic spring characteristics of the first and second embodiments;
Fig. 4 is a view similar to Fig. 1 but showing a third embodiment;
Fig. 5 is a view taken from arrow Z in Fig. 4, for a medium to high frequency device;
Fig. 6 is a view similar to Fig. 1 but showing a fourth embodiment;
Fig. 7 is a graph of the dynamic spring characteristics of the third and fourth embodiments;
Fig. 8 is a sectional view taken along line 8-8 of Fig. 10;
Fig. 9 is a sectional view taken along line 8-9 of Fig. 10;
Fig. 10 is a plan view of a fifth embodiment of an engine mount;
Fig. 11 is a view showing the shape in plan view of first and second orifice passages;
Fig. 12 is a sectional view of a driving portion;
Fig. 13 is a view showing the side shape of a cylindrical covering portion;
Fig. 14 is an enlarged sectional view of a main portion;
Fig. 15 is a view showing an assembling process of the device; and
Fig. 16 a graph of the dynamic spring characteristics of the fifth embodiment.

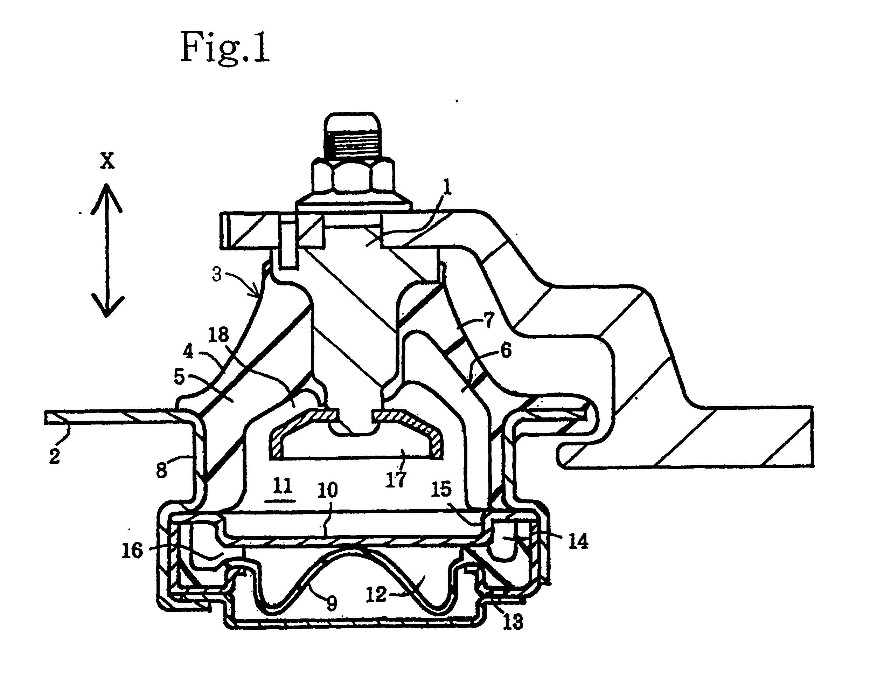

Referring to Fig. 1, an engine mount comprises a first support member 1 for attachment to an engine as a vibration source, a second support member 2 for attachment to a vehicle body, and a resilient member 3 interposed between the first support member 1 and the second support member 2.

The first support member 1 is of shaft shape, and extends into the second support member 2 in a direction parallel to an input direction X of a principal vibration. The resilient member 3 is formed from a suitable elastic material such as rubber or elastomer and includes a generally conical portion 4 integral with a cylindrical portion 5.

On the inner wall of the conical portion 4, a pair of similarly shaped recesses 6 are formed at diametrically opposite position. The conical portion 4 at each recess 6 is a thin wall portion 7. Each recess 6 continues into the inside of the cylindrical portion 5.

The cylindrical portion 5 is integrated with an inside face of a cylindrical covering portion 8 of the second support member 2 and defines a liquid chamber in conjunction with a diaphragm 9 fixed to the inside of the cylindrical portion 8, and the resilient member 3.

This liquid chamber is divided into a main liquid chamber 11 on the first support member side and an auxiliary liquid chamber 12 on the diaphragm 9 side, by a partition member 10 provided on the inner side of the diaphragm 9, and the two liquid chambers communicated by way of an orifice passage 14 formed between the partition member 10 and a rim portion 13 of the diaphragm 9.

The orifice passage 14 communicates with the main liquid chamber 11 at an inlet 15 formed in the partition member 10 and with the auxiliary liquid chamber 12 at an outlet 16 formed in the resilient member 3.

The first support member 1 extends along a center line of the resilient member 3 and an end thereof projects into the main liquid chamber 11, where a generally cup shaped medium to high frequency device 17 is fixed to the member 1 by caulking. The medium to high frequency device 17 is formed in a circular shape as viewed in the axial direction of the first support member 1.

Between the medium to high frequency device 17 and an inner face of the conical portion 4, a designated orifice gap 18 is formed and is adapted to absorb input vibrations in the high frequency range, by liquid column resonance.

The thin wall portion 7 is adapted to absorb input vibrations in the designated medium to high frequency range by membrane resonance, owing to changing thickness and area of the membrane, through controlling the size and depth of the recess 6.

The operation of the present embodiment will now be described. As shown in FIG. 3 as the characteristic curve 1, when a vibration in the medium to high frequency range is inputted, the thin wall portion 7 generates membrane resonance and the dynamic spring constant yields the minimum value A at a pre-set designated frequency.

When a vibration in the high frequency range is inputted, the dynamic spring constant yields a minimum value B at another pre-set frequency f2 by liquid column resonance in the orifice gap 18 between the thin wall portion 7 and the inner face of the conical portion 4.

As a result of this, two minimum values A and B are formed in the medium to high frequency range, as compared with a conventional example (the phantom line in Fig. 3). Thus a low dynamic spring constant is achieved, owing to the lowering of the dynamic spring characteristic. Between the both minimum values A and B, a peak P1 of the dynamic spring resonance is formed by a reaction of the membrane resonance A.

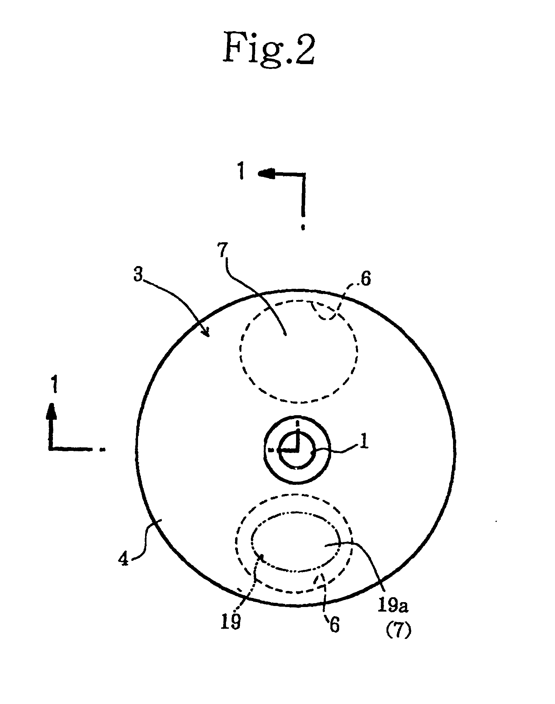

The characteristic curve 2 in Fig. 3 relates to the second embodiment, which is illustrated by a broken line in only one side of the thin wall portion 7 in Fig. 2. Here a thin wall portion 19a is provided, which is made thinner by forming a deep recess 19, the thin wall portion 7 of the recess 6 and the thinner wall portion 19a of the deep recess 19 being arranged to be the symmetrical thin wall portion differing in shape. When the resilient member 3 is thus formed, because the membrane resonance frequencies in the thin wall portion 7 and the thinner wall portion 19a are mutually different, two minimum values C and D occur in the medium to high frequency range which result that a lower dynamic spring constant can be achieved.

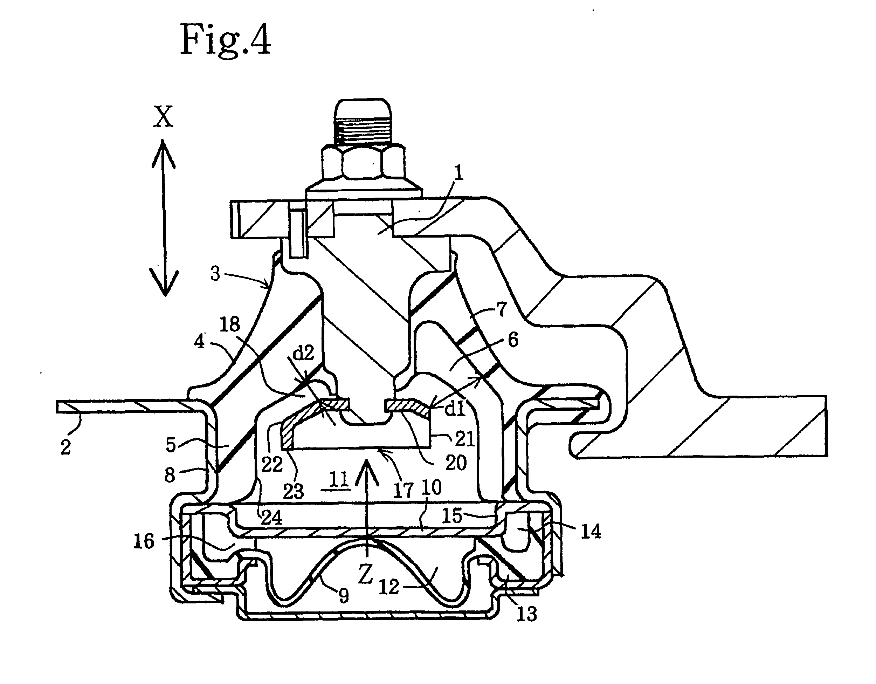

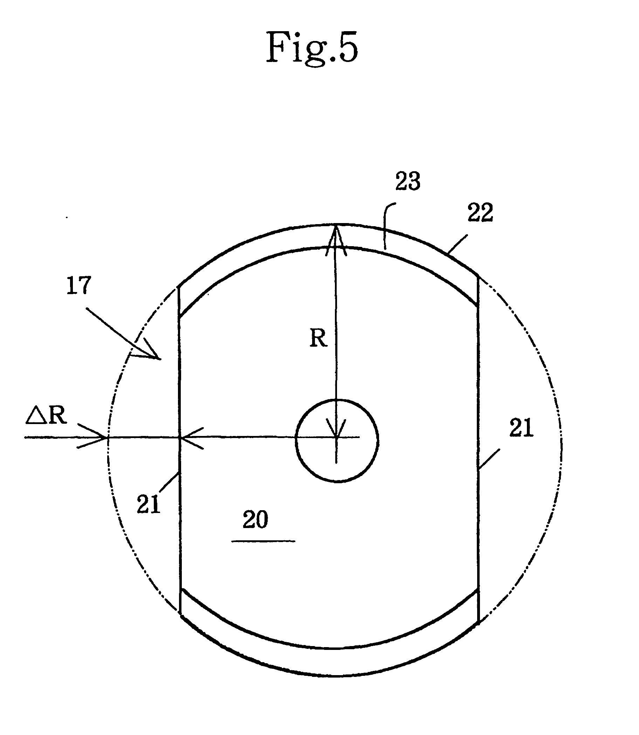

In Figs. 4 and 5, which are views of a third embodiment, parts common to the first and second embodiments are given the same references and will not be described again.

The medium to high frequency device 17 of the third embodiment is formed in a non-circular shape and the designated orifice gap 18 is formed between the inside face of the conical portion of the resilient member 3 and the device 17 so as to absorb input vibrations in the high frequency range by the liquid column resonance.

When the resilient member 3 is viewed from above in Fig. 4, the recesses 6 of this embodiment are symmetrically formed therein but displaced by 180 degrees as compared with Fig. 2. The thin wall portion 7 is adapted to absorb input vibrations of the specified medium frequency range by membrane resonance, through changing the thickness and area of the membrane by selection of the area and depth of the recess 6.

If two recesses 6 arranged at the symmetrical positions are formed with mutually different depths in the embodiment shown in Fig. 2, two minimum values are generated in the medium frequency region and hence an even lower dynamic spring constant can be attained.

FIG. 5 is a view in the direction of the arrow Z in FIG. 4, namely parallel to the input direction X of a principal vibration. In this embodiment the medium to high frequency device 17 is made of a generally oval shape and a pair of cut out portions 21 are formed at symmetrical positions.

The cut out portions 21 correspond to the shape cut out from a portion facing the thin wall portion 7 by a ΔR part of the main body 20 constructed originally as a circle having a radius R in an arrow Z direction. On an arcuate portion 22 having a radius R displaced 90 degree therefrom, a flange 23 is formed.

Owing to this cut out portion 21, a projection area of the medium to high frequency device 17 in an axial line direction of the first support member 1 becomes smaller than when the whole body is constructed as a circle having a radius R, and the flow volume of the liquid owing to the medium to high frequency device 17 is correspondingly reduced.

As a result of this, as apparent from FIG. 4, a gap d1 is formed between the cut out portion 21 and the thin wall portion 7 and a gap d2 is also formed between the arcuate portion 22 and the rubber inner wall 24 facing the same. Of these gaps, d1 is arranged to be by far larger than d2. These spaces correspond to the orifice gap 18.

The operation of the present embodiments will now be described. In Fig. 7, 1 is a characteristic curve relating to the first embodiment and 3 is a characteristic curve of the third embodiment. As shown therein, when a vibration in the medium frequency range is inputted, the thin wall portion generates membrane resonance and a minimum value A occurs at the pre-set specified frequency.

Then, when a vibration in the high frequency range is inputted, a minimum value B occurs at a specified frequency by liquid column resonance in the orifice gap 18 between the thin wall portion 7 and the inner face of the conical portion 4.

As a result of this, two minimum values A and B occur in the medium to high frequency range, and compared with a conventional example an extremely low dynamic spring characteristic is achieved.

Furthermore, because the minimum value B generated by liquid column resonance is smaller than the case in which the gap d1 is large and the projection shape of the medium to high frequency device 17 is circular, the resonance frequency becomes higher than when a circular medium to high frequency device is used, as shown by a characteristic curve in phantom line as a comparative example. At the same time, because the liquid volume permitted to flow by the medium to high frequency device 17 is reduced, the liquid resonance energy becomes small and approaches the resonance energy of the membrane resonance.

As a result of this, the interval of the minimum values A and B become wider and the peak value P is substantially reduced from the peak value PI obtained when using a circular medium to high frequency device. Hence as a whole, a low dynamic spring constant is obtained.

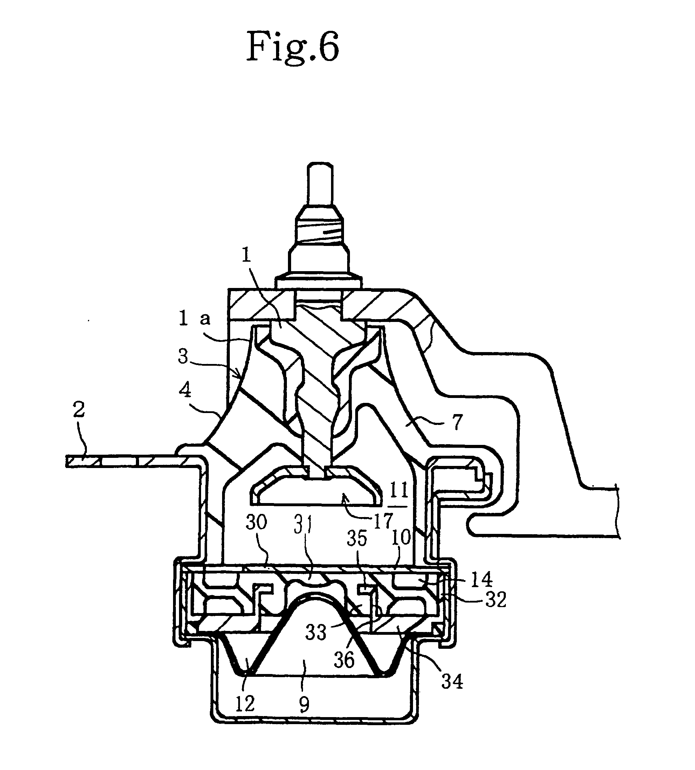

In FIG. 6 a fourth embodiment is shown, in which the resilient partition wall is provided on a lower portion of the engine mount compared with the first embodiment. A resilient partition wall 31 made of an elastic membrane such as rubber or the like is arranged to face a hole 30 formed in the center portion of the ring shaped partition member 10. A bottom peripheral portion of the resilient partition wall 31 is integrated with a thick portion 32 and on a bottom portion thereof, a leg portion 33 is formed so as to deform according to deformation of the resilient partition wall 31.

A part of the resilient wall 31 facing the hole 30 is arranged to be a thin wall portion against the thick wall portion 32 and functions as a kind of a rubber spring by possessing a spring property, which is resiliently deformed according to the inner pressure change of the main liquid chamber 11 and is adapted to resonate as a membrane.

The leg portion 33 abuts a wall portion 35 integrally formed with a lower support member 34 and creates a non-linear spring characteristic upon deformation of the resilient partition wall 31. The lower support member 34 is a resin member supporting a bottom portion of an outer peripheral side of the thick wall portion 32, and the wall portion 35 is formed to deform upwards, generally perpendicularly, from the inner peripheral side thereof. The wall portion 35 is fitted into a ring groove 36 formed on a bottom portion of the thick wall portion 32 and a side abutting the wall portion 35 of the leg portion 33 is separated from the other thick wall portion 32 by the ring groove 36 so as to move freely.

Reference 9 in the drawing denotes a diaphragm. The orifice passage 14 is formed within the thickness of the thick wall portion 32 in a circumferential direction and communicates the main liquid chamber 11 with the auxiliary liquid chamber 12. Reference 1a is a resin bracket integrated with a periphery of the first support member as a forged product.

According to the present embodiment, as shown in characteristic curve 4 of Fig. 7, since the resilient partition wall 31 absorbs the inner pressure of the main liquid chamber 11 by its resilient deformation, the dynamic spring constant in the medium frequency range is reduced by ΔK compared to the characteristic curves 1 and 0. Further, the resilient partition wall 31 membrane-resonates liquid flow in the main liquid chamber 11.

Because the membrane resonance of the resilient partition wall 31 is complicated by the membrane resonance of the thin wall portion 7 in the conical portion 4 and the liquid column resonance caused by the medium to high frequency device 17, the minimum values A, B and the peak of the dynamic spring constant between A and B as shown by the characteristic curves 1 to 3, are gently smoothed, and remarkably low dynamic spring characteristics are attained over substantially the entire range of the medium to high frequency.

The peak P3 of the dynamic spring in FIG. 3, because the resilient partition wall 31 membrane-resonates naturally at a plural frequency, occurs by one resonance thereof and at a part which is left without being smoothed through the liquid column resonance by the medium to high frequency device 17. Therefore, the characteristic has a rather higher dynamic spring constant in the medium frequency range than the characteristic curve 1 and the like, but such a higher dynamic spring constant can be accepted in view of the low dynamic spring constant over whole frequency range.

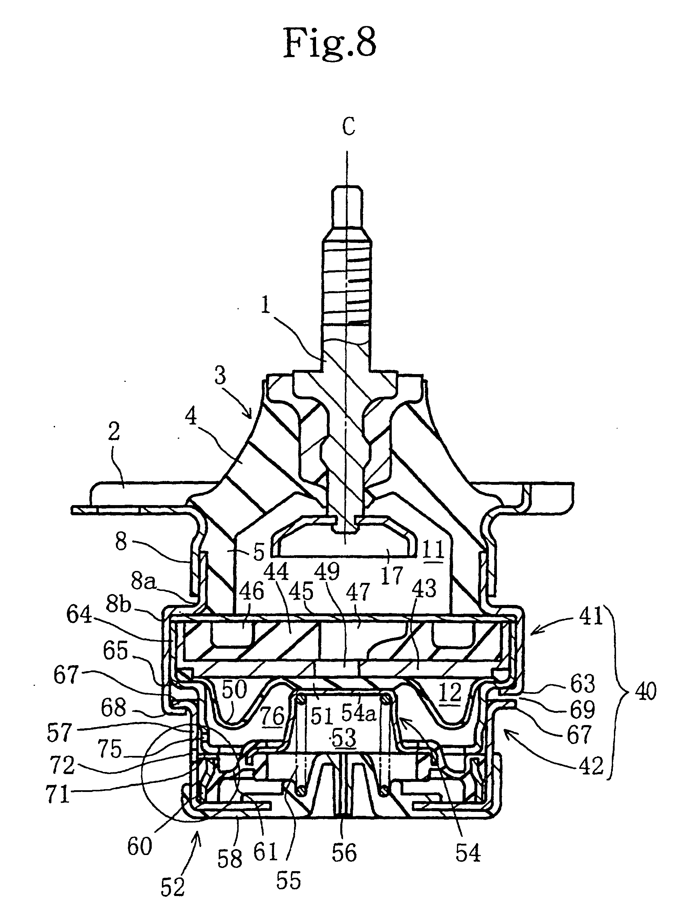

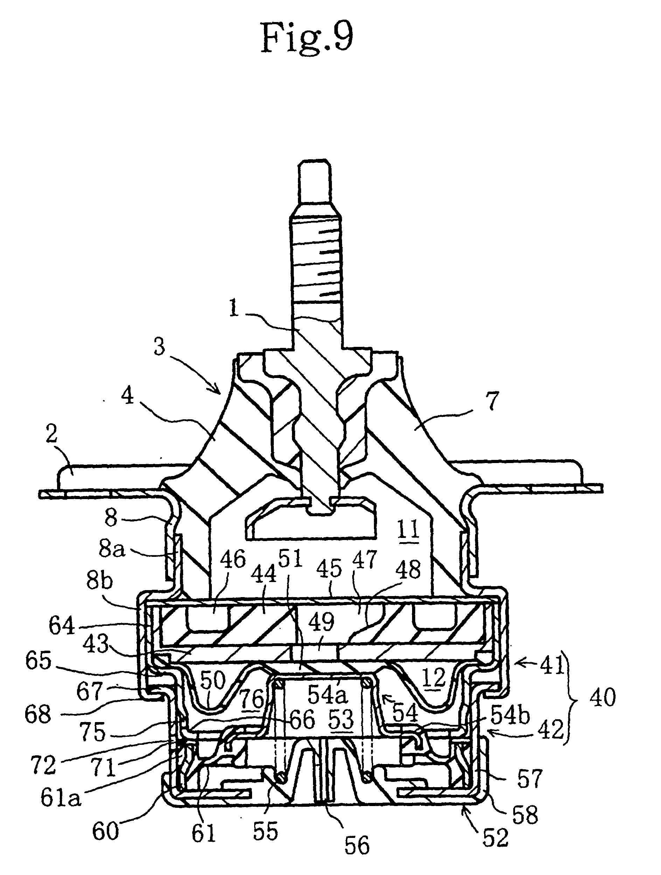

Referring now to Figs. 8 to 16 showing a fifth embodiment, this embodiment employs an elastic control mechanism using a switching valve instead of the resilient partition wall of the previous embodiment.

This elastic control mechanism 40 is assembled from on orifice portion 41 and a driving portion 42, the orifice portion 41 comprising a cylindrical upper cup-like member 43, a thick circular orifice member 44 fitted inside the same, a disklike cover 45, and a diaphragm 50 forming the auxiliary chamber 12 between itself and the orifice member.

In the orifice member 44, a first orifice passage 46 corresponds to the damping orifice of the orifice passage 14 of the previous embodiments, which contributes to vibration damping in the low frequency range, while a second orifice passage 47 is the orifice passage for the pre-set frequency.

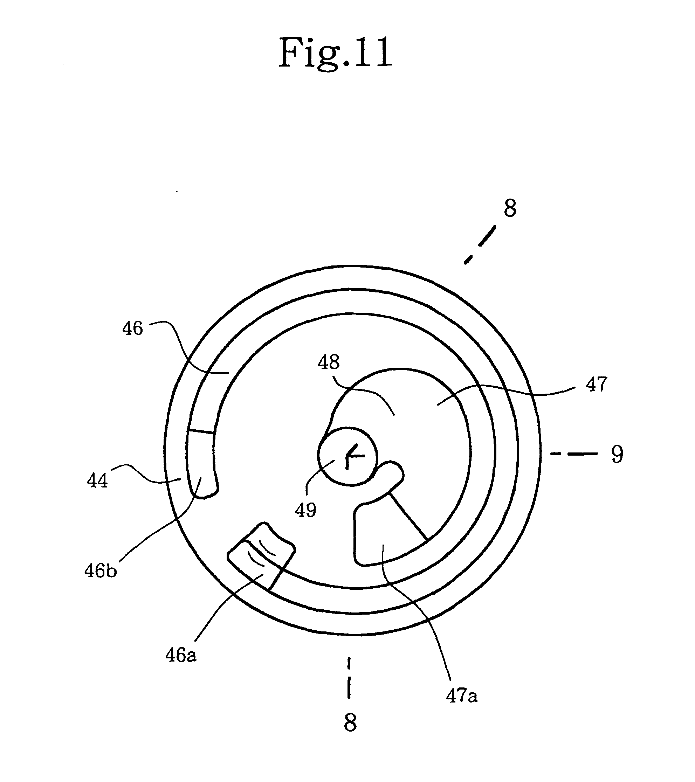

As is apparent from Fig. 11 which shows a plan view of the first orifice passage 46 and the second orifice passages 47, the first orifice passage 46 communicates with the main liquid chamber 11 and the auxiliary liquid chamber 12 at an opening (not shown) extending spirally in the thickness of the orifice member 44 close to the outer periphery thereof. Reference 46a is a sloping inlet of the first orifice passage 46 which is enlarged in the direction flow, 46b is an outlet thereof and 47a is an inlet of the second orifice passage 47.

The second orifice passage 47 is arranged to pass through both sides of the orifice member 44 inside of the first orifice passage 46, and a guide slope 48 is formed toward an opening 49 formed in the central region of the upper cup-like member 43, to define a slanting flow line for liquid flowing out from the outlet 49.

The shape of the opening portion of the outlet 49 is made also to be asymmetric with respect to the center line C and opens widely in the direction of flow by means of the guide slope 48. This outlet 49 is adapted to be freely opened and closed by an opening and closing portion 51 formed at the central region of the diaphragm 50.

The diaphragm 50 is similar to that of the previous embodiments but differs in that it is provided with the opening and closing portion 51 whose flat contact surface seats tightly on the periphery of the outlet 49. Opening of the opening and closing portion 51 is assured by the liquid flowing out from the outlet 49 acting at a position offset from the center by virtue of the slanting flow line.

The driving portion 42 comprises a lower cup-like member 52 and a switching valve 54 fitted inside the same to form a sealed space 53. A seat portion 54a at the top portion of the switching valve 54 abuts the opening and closing portion 51. The switching valve 54 is urged in the closing direction by a return spring 55. The switching valve is caused to move against the return spring 55 by connecting the inside of the sealed space 53 to a negative pressure supply (not shown) through a joint pipe 56, thus making the opening and closing portion 51 free to open the outlet 49 of the second orifice passage 47.

Opening and closing of the switching valve 54 can be set to occur at an optional specified frequency. In the present embodiment it is set to a frequency corresponding to engine idling, so the second orifice passage 47 is adapted to be an idling orifice. Opening and closing of the switching valve 54 is possible not only by utilizing such a negative pressure but also by various known methods such as electromagnetic operation.

The lower cup-like member 52 comprises a cup-like metal member 57 at a central bottom region thereof, formed with a large opening, and a resin portion 58 formed integrally with the joint pipe 56 to cover the said bottom region from a lateral lower half portion thereof. A fixing ring 60 is fitted by pressure fitting to the inside of a peripheral portion of the cup-like metal member 57, to locate the switching valve 54.

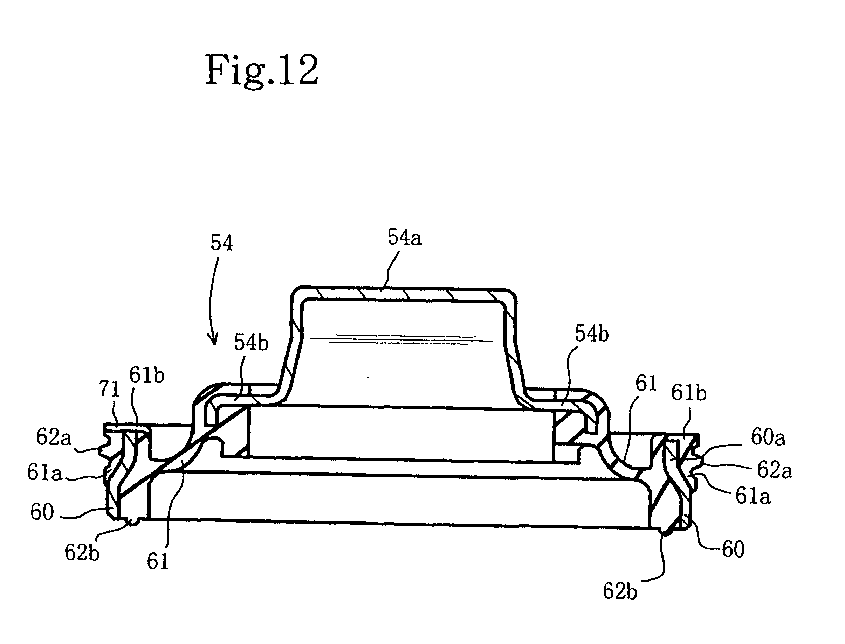

Fig. 12 is an enlarged view of a section of the switching valve 54 of Fig. 8. As may be seen, the switching valve 54 is of inverted cup-like form. A membrane member 61 made from elastic material such as rubber connects between the flange portion 54b formed on a lower portion thereof, and the fixing ring 60a. The membrane member 61 does not possess sufficient elasticity to affect the operation of the switching valve 54.

A part of membrane member 61 arranged to cover the fixing ring 60 has an upper end covering portion 61b which covers an upper end portion of a small diameter portion 60a formed on an upper portion of the fixing ring 60 and extends outwardly to form an outer periphery covering portion 61a. The portion 61a and the upper end covering portion 61b are formed around the whole circumference and these parts compose the ring shaped elastic member of the present embodiment. On the outer surface of the outer periphery covering portion 61a a first seal lip 62a is integrally formed to project in the radial direction. Also a lower end portion of the membrane member 61 inside the lower end portion of the fixing ring 60 is formed as a second seal lip 62b which projects downwards. These seal lips are respectively formed around the whole circumference.

As will be seen from Figs. 8, 9, 13 and 15, a portion 8a which is part of the cylindrical portion 8 extends downwards beyond the elastic member 3, and has a large diameter portion 8b which accommodates the orifice portion 42 and fixes the orifice portion 41 by way of a first caulking portion 63 formed on a lower end portion of the large diameter portion 8b.

Between the large diameter portion 8b and a peripheral wall portion of the upper cup-like member 43, an upper end portion of a positioning ring 64 is located. The positioning ring 64 includes a step portion 65 at a lower portion of the upper cup-like member 43, and a portion below the step portion 65 is a smaller diameter portion having an outer diameter the same as the inner periphery of the cup-like metal member 57.

Because an outer peripheral portion of the diaphragm 50 and the outer periphery of the bottom portion of the upper cup-like member 43 are supported inside of the step portion 65 and are caulked from the outside thereof by the first caulking portion 63, which results in the step portion 65 causing the outer periphery of the diaphragm 50 to stick to the bottom portion of the upper cup-like portion 43, liquid tightness of the auxiliary liquid chamber 12 and the main liquid chamber 11 are assured.

A lower end portion of the positioning ring 64 is formed as a flange portion 66 which bends inwards and abuts elastically on an upper end covering portion 61b which is a part of the membrane member 61 and covers an upper end portion of the fixing ring 60.

An upper end portion of the cup- like metal member 57 extends also to the vicinity of the step portion 65, where it is formed as a flange portion 67 which bends outwards and is fixed by a second caulking portion 68 to the large diameter portion 8b. Between the flange portion of the cup-like metal member 57 and the first caulking portion 63, a small gap is formed (see Fig. 8).

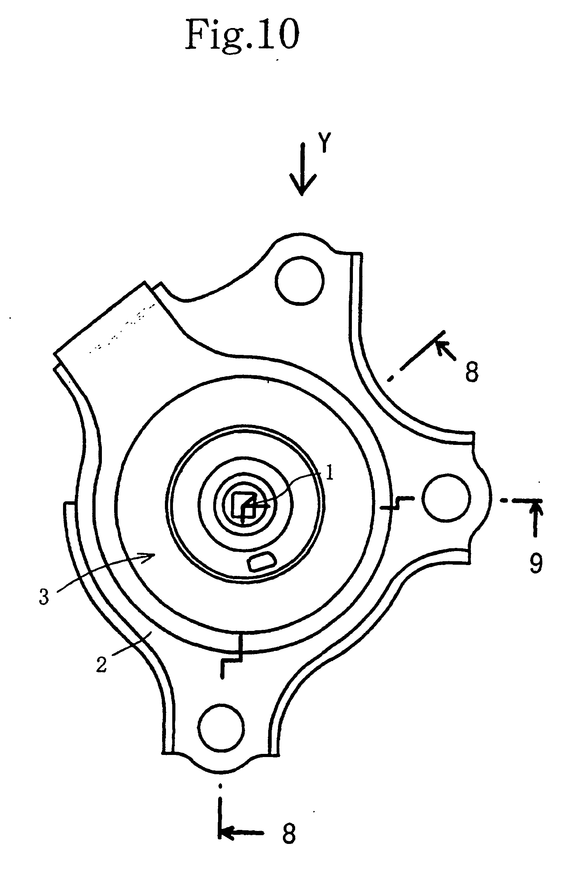

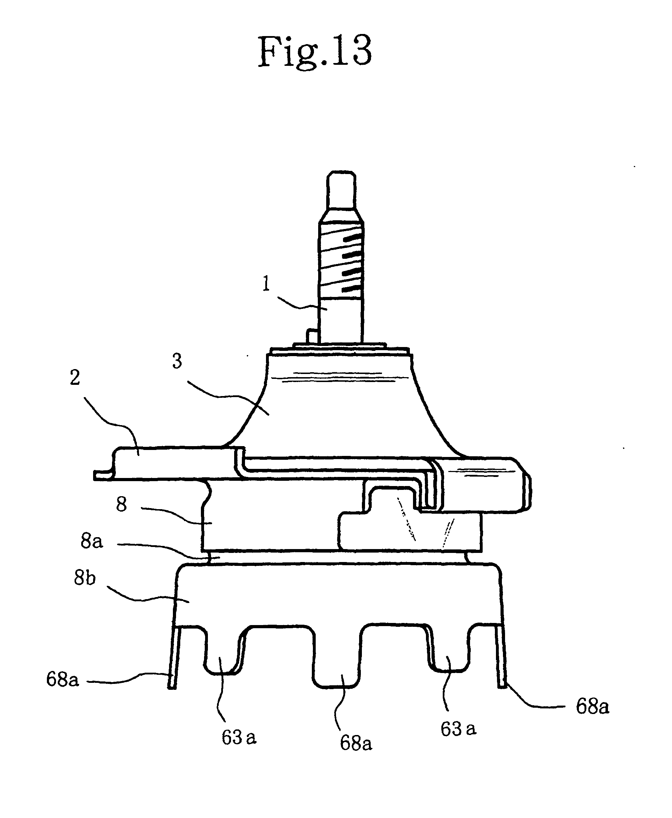

Fig. 13 shows the side shape of the cylindrical covering portion 8 before connecting with the driving portion 42, as seen from the arrow Y direction of Fig. 10. In this Figure, the cylindrical covering portion 8 is shown integrated with the upper construction including the elastic member 3. On a lower portion of the large diameter portion 8b, a first claw 63a and a second claw 68a are provided, projecting downwards.

The first and second claws 63a and 68a form the first and second caulking portions 63 and 68 by bending the lower end portions thereof, such parts can be made to have a different depth by changing the extent to which they project downwards from the lower end portion of the large diameter portion 8b. They may be formed alternately at suitable intervals in the circumferential direction.

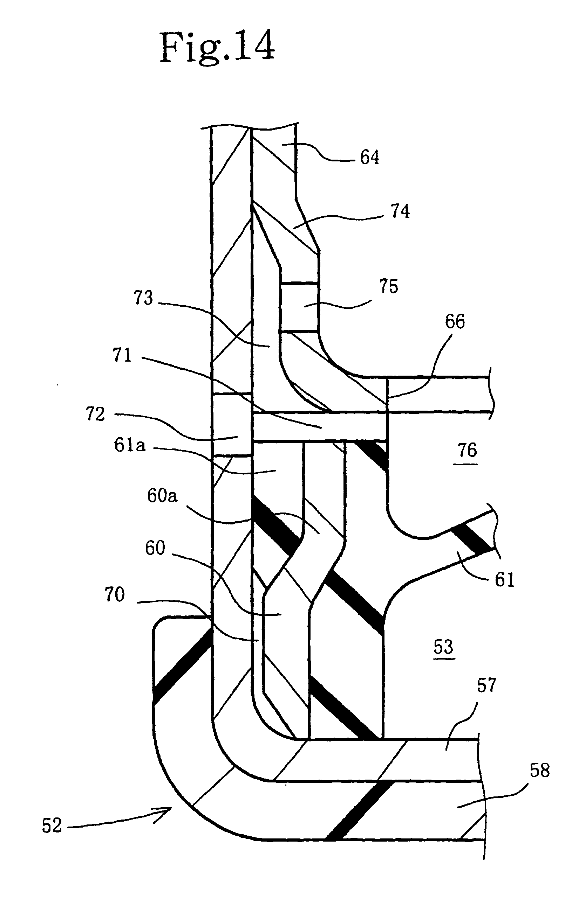

Fig. 14 is an enlarged view of the portion F in Fig. 8. As may be seen from the drawing, the outer diameter of the lower portion of the fixing ring 60 is smaller than the inner diameter of the cup-like metal member 57, and between such members a gap 70 is provided. On the upper end covering portion 61b covering the upper end of the fixing ring 60, radial ventilation grooves 71 are formed at suitable intervals in the circumferential direction, to communicate the inner space 76 between the switching valve 54 and the diaphragm 50 with the atmosphere, through a hole 72 in the cup-like metal member 57.

The part of the flange portion 66 of the positioning member 64 which overlaps the upper end covering portion 61b is further reduced in diameter and is arranged as a step portion 74 forming a small gap 73 between itself and the inner periphery of the cup-like metal member 57. A through hole 75 is provided through which the inner space 76 between the switching valve 54 and the diaphragm 50 communicates with the atmosphere opening hole 72. A lower portion of the atmosphere opening hole 72 is provided at a lower level than the ventilation groove 71.

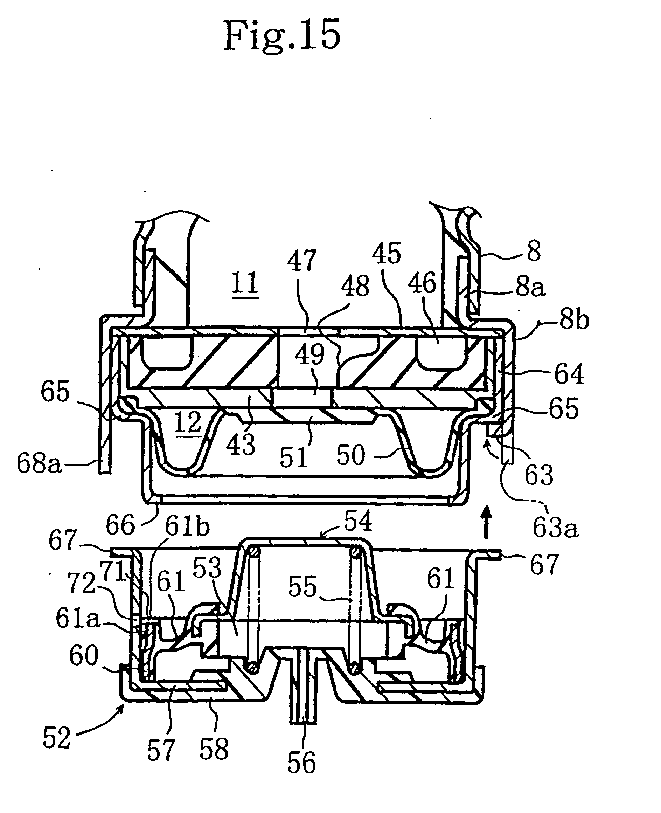

Fig. 15 shows an assembling process of the elastic control mechanism 40. First the orifice portion 41 is accommodated in the large diameter portion 8b and is caulked by the first caulking portion 63, whereby the liquid sealed mount portion is integrated as a sub-assembly.

Then, after the driving portion 42 has been located under the orifice portion 41 and the flange portion 66 has been abutted against the upper end of the fixing ring 60, the second caulking portion 68 is caulked to the flange portion 67, which completes the whole assembly.

At this time, since the positioning ring 64 controls the mounting position of the driving portion 42 to the orifice portion 41, it is elastically pressed against the fixing ring 60 through the upper end covering portion 61b. The gap 69 between the first caulking portion 63 and the flange portion 17 of the cup-like metal member 57 can be easily absorbed, even if there is some amount of dimensional error.

Though the medium to high frequency device 17 of Fig.4 is used in the present embodiment, it can optionally be changed for one used in another embodiment. The effect that produces membrane resonance by the medium to high frequency device 17 and the thin wall portion 7 of the resilient member 3, will not be changed as compared with the other embodiments.

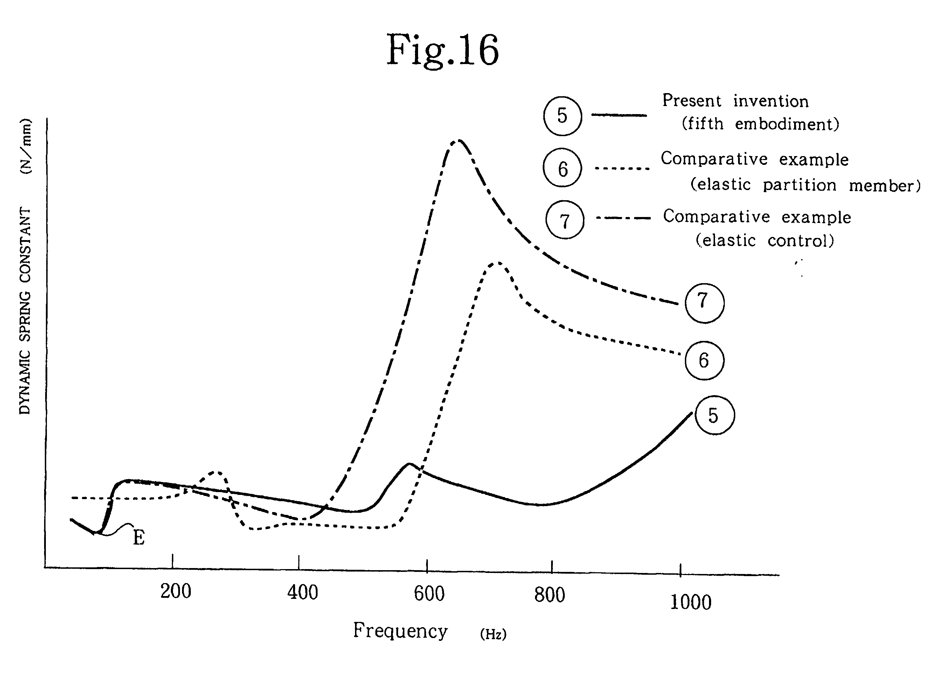

In the present embodiment, since membrane resonance of the thin wall portion 7 takes place in the medium frequency range, and liquid column resonance takes place in the high frequency region, the characteristic curve in the medium to high frequency range becomes 5 as seen in Fig. 16, being substantially similar to the characteristic of the third embodiment (3 in Fig. 7) in this region.

However, because in an idling condition in the low frequency range in the present embodiment, the switching valve 54 is lowered and the second orifice passage 47 is communicated with the auxiliary liquid chamber 12 through detaching the opening and closing portion 51 from the outlet 49, as is shown in the drawing, the dynamic spring constant in the idling range is significantly reduced and can be lower than that of 4 in Fig. 7.

Therefore, a low dynamic spring constant can be achieved in almost the entire range of low frequency, medium frequency and high frequency. Additionally, because a low dynamic spring constant can be achieved at a designated frequency by an elastic control mechanism, it is easily possible to achieve a low dynamic spring constant at a frequency which especially requires such an effect, for example in the idling range. However, this designated frequency can be optionally set over almost the entire frequency range from low frequency to high frequency.

In Fig. 16, 6 and 7 are the dynamic spring characteristics of comparative examples relating to the liquid sealed mount. The elastic mount of each liquid sealed mount thereof is a type not provided with a thin wall portion in the recess such as in the present embodiments having the medium to high frequency device. Curve 6 is an example using the elastic partition member as shown in the embodiment of Fig. 6, while curve 7 is an example using the elastic control mechanism as in the present embodiment. Each example is provided with a damping orifice for the low frequency range, but is not constructed to produce membrane resonance in the medium frequency region and liquid column resonance in the high frequency range and are thus almost the same as the conventional example shown in Fig. 3. Incidentally, because in curve 7 switching of the orifice passage in the idling region is effected by the same mechanism, either characteristic coincidences merely in this region.

Additionally, in this embodiment, since the orifice 41 side in which the liquid is sealed, and the driving portion 42 actuating the valve by negative pressure, are separated and are arranged to be individually secured in different processes, there is no possibility of the sealed liquid invading the driving portion 42 side and reaching the driving center portion such as the negative pressure tank. Consequently, the quality of the product can be improved, and at the same time the assembling process is made easier.

In addition, if the driving portion 42 is removed and the orifice portion 41 is changed to a partition wall such as the partition member 10, or to the elastic partition wall construction of Fig. 6, the mounting construction of Fig. 1 or Fig. 6 is easily obtained. Hence component sharing can be achieved.

Moreover, because the orifice portion 41 and the driving portion 42 can be fixed by the first caulking portion 63 and the second caulking portion 68, owing to two kinds of claws 63a and 68a provided on the large diameter portion 8b, the number of the parts can be decreased, and the fixing and assembling process can be simplified.

Since a gap 69 is formed between the flange portion 67 of the cup-like metal member 57 and the first caulking 63, and the flange 66 on the lower end portion of the positioning ring 64 is abutted against the upper end covering portion 61b, dimensional tolerance in the height direction (namely the center line C direction) can be absorbed. Still more, as the positioning ring 64 can decide the mounting position of the driving portion 42 to the orifice portion 41, dimensional is easier than in the past, the assembling process is made easier and a reduction of costs can be achieved.

Furthermore, because a gap 70 is provided between the lower portion of the fixing ring 60 fixing the switching valve 54 and the inside face of the cup-like metal member 57, and the fixing ring 60 is arranged to fit into the inside of the member 57 via the elasticity of the outer periphery covering portion 61a, when the fixing ring 60 is fitted into the member 57 this can be done with a light load, and hence capital investment in a press machine can be decreased. At the same time, since the outer periphery covering portion 61a on the upper portion of the fixing ring 60 resiliently contacts to the inside of the cup-like metal member 57, which result in absorbing the dimensional tolerance in the radial direction in cooperation with the gap 70, dimensional control is easier than in the past, the assembly process becomes easier and a reduction of costs can be achieved.

In addition, since the fixing ring 60 is pressed against the inside of the cup-like metal member 57 by the first seal lip 62a and is also pressed against the bottom portion of the member 57 by the second seal lip 62b, which results in the fixing ring 60 possessing a double seal construction to the member 57, the airtightness is higher in the sealed space 53 applied with the negative pressure and the operational accuracy of the device is thereby improved.

Furthermore, because the ventilation groove 71 and the through hole 75 communicate with the atmosphere opening hole 72 through the gap 73 formed around the whole circumference, the air in the inner space 76 between the switching valve 54 and the diaphragm 50 can be released to the atmosphere. Consequently, an orifice resonance effect can be achieved through making the movement of the diaphragm 50 smooth. Also, since atmospheric pressure can thereby be maintained even if thermal expansion or contraction of the air occurs, the performance of the device can be stabilized through reducing the effect on the characteristics from thermal change. Besides, since the lower portion of the atmosphere opening hole 72 is provided at a lower position than the ventilation groove 71, water entering through the atmosphere opening hole 72 will not readily gather in the ventilation groove 71 and the through hole 75.

Moreover, the ventilation groove 71 and the through hole 75 can communicate with the atmosphere opening hole 72 via the gap 73 even if fixing ring 60 and the positioning ring 64 are respectively situated at any location relative to the cup-like metal member 57 in the circumferential direction. Accordingly, since the fixing ring 60 and the positioning ring 64 can be respectively positioned freely with respect to the member 57 in the circumferential direction, the assembly process can be improved.

The present invention may be practised in various ways not limited to the above described embodiments. For example, the medium to high frequency device of the second embodiment can be used in the third embodiment. Similarly, the medium to high frequency device of the first embodiment can be used in the fifth embodiment.

## Claims

1. A liquid sealed type elastic mount device comprising:
a first support member (1) for attachment to a vibration source;
a second support member (2) for attachment to a vehicle body;
an elastic member (3) of substantially conical shape interposed between the said first and second support members, the first support member and second support member being adapted to form a liquid chamber therebetween with at least a part of a wall thereof, and a thin wall portion (7) being formed on a part of a conical portion of the elastic member;
**characterised in that**
a partition wall (10,31,44) divides the liquid chamber into a main liquid chamber (11) and an auxiliary liquid chamber (12);
an orifice passage (14) is formed within the partition wall for normally communicating the two liquid chambers;
part of the wall defining said auxiliary liquid chamber is formed as a diaphragm (9); a medium to high frequency device (17) is provided which is attached to the said first support member and projects into the main liquid chamber so as to absorb a vibration component of medium to high frequency by forming a flow space (18) between itself and the inner wall of the conical portion (4) of the elastic member, and the thin wall portion (7) is formed on the part of the conical portion of the said elastic member adjacent to the medium to high frequency device so as to generate membrane resonance via vibration input in the medium to high frequency range.

2. A device according to claim 1, including a plurality of said thin wall portions (7), arranged symmetrically and of the same shape.

3. A device according to claim 1, including a plurality of said thin wall portions (7), arranged symmetrically and being of different shapes.

4. A device according to any of claims 1 to 3, wherein the said medium to high frequency device (17) is of a non-circular shape with a cut out portion (21) adjacent to the said thin wall portion (7) in a peripheral part thereof as viewed in the principal input direction of a vibration (X), a gap (d1) being provided between the said cut out portion and the said thin wall portion which is larger than at other locations.

5. A device according to any preceding claim, wherein the said partition wall is an elastic partition wall (31) arranged to change the dynamic spring characteristic thereof according to an inner pressure change in the liquid chamber (11).

6. A device according to any of claims 1 to 4, wherein said partition wall (44) has a plurality of orifice passages (46,47) having different properties to switch at designated frequencies.

7. A device according to claim 6, further comprising an opening and closing portion (51) for switching the said orifice passages (46,47) formed on a part of a diaphragm (50) comprising an auxiliary camber (12), a driving portion (42) to open and close the said opening and closing portions, and wherein a cylindrical metal covering member (8) is provided to cover a periphery of an elastic member, having on an open end thereof first (63a) and a second (68a) claws of different heights, a first caulking portion (63) fixing the partition wall and the diaphragm by caulking with the said first claw, and a second caulking portion (68) fixing a driving portion by caulking with the said second claw.

8. A device according to claim 7, wherein the driving portion (42) comprises a top portion (54a) abutting against the said opening and closing portion (51), a cylindrical membrane member (61) integrated at an end thereof with an outer peripheral portion of the said top portion to allow movement of the top portion, a fixing ring (60) integrated with another end of the membrane portion, and a cup-like member (57) fitted to the fixing ring, wherein to the cylindrical covering member a positioning ring (64) is provided to fix an end thereof by a first caulking portion (63), and an tip portion of this positioning ring is abutted against a part of the ring portion elastic member covering the fixing ring after being inserted into the said cup-like member, an opening edge portion of the said cup-like member being fixed by a second caulking portion (68) so that a gap is formed between the opening edge portion of the cup-like member and the first caulking portion.

9. A device according to claim 8, wherein the said fixing ring (60) has a small diameter portion (60a) and a large diameter portion, a gap is formed between an outer peripheral face of the large diameter portion and an inner peripheral face of the said cup-like member (57), on an outer peripheral portion of the small diameter portion an outer periphery covering portion (61a) is provided which is formed by a part of the ring portion elastic member and contacted with an inner peripheral face of the cup-like member, a first seal lip (62a) projecting from the outer periphery covering portion and pressed against an inner peripheral face of the cup-like member, and a second seal lip (62b) projecting from the ring portion elastic member close to an end portion of the fixing ring and pressed against a bottom portion of the cup-like member.

10. A device according to claim 9, wherein on a part of the positioning ring (64) a small diameter portion is provided to form an entire circumferential gap between the inner peripheral face of the said cup-like member (57) and through the gap an atmosphere opening hole (72) is provided in the cup-like member which communicates with a space between the diaphragm (50) and the driving portion (42).

## Patentansprüche

1. Flüssigkeitsdichte elastische Lagervorrichtung, umfassend:
ein erstes Halteelement (1) zur Anbringung an einer Vibrationsquelle;
ein zweites Halteelement (2) zur Anbringung an einer Fahrzeugkarosserie;
ein elastisches Element (3) von im Wesentlichen konischer Form, welches zwischen dem ersten und dem zweiten Halteelement angeordnet ist, wobei das erste Halteelement und das zweite Halteelement derart eingerichtet sind, dass sie dazwischen mit wenigstens einem Teil einer Wand derselben eine Flüssigkeitskammer bilden und wobei an einem Teil eines konischen Abschnitts des elastischen Elements ein dünnwandiger Abschnitt (7) gebildet ist;
**dadurch gekennzeichnet,**
**dass** eine Trennwand (10, 31, 44) die Flüssigkeitskammer in eine Hauptflüssigkeitskammer (11) und eine Nebenflüssigkeitskammer (12) unterteilt;
**dass** ein Mündungsdurchgang (14) innerhalb der Trennwand ausgebildet ist, um die zwei Flüssigkeitskammern im Normalfall miteinander zu verbinden;
**dass** ein Teil der die Nebenflüssigkeitskammer definierenden Wand als Membran (9) ausgebildet ist;
**dass** eine Einrichtung für Mittel- bis Hochfrequenz (17) bereitgestellt ist, welche an dem ersten Halteelement angebracht ist und in die Hauptflüssigkeitskammer vorsteht, um eine Vibrationskomponente mittlerer bis hoher Frequenz zu absorbieren, indem sie einen Strömungsraum (18) zwischen sich selbst und der Innenwand des konischen Abschnitts (4) des elastischen Elements ausbildet, und dass der dünnwandige Abschnitt (7) an dem Teil des konischen Abschnitts des elastischen Elements gebildet ist, der der Einrichtung für Mittel- bis Hochfrequenz benachbart ist, um über eine Vibrationseingabe im Mittel- bis Hochfrequenzbereich eine Membranresonanz zu erzeugen.

2. Vorrichtung nach Anspruch 1, welche eine Mehrzahl der dünnwandigen Abschnitte (7) enthält, die symmetrisch angeordnet und von gleicher Form sind.

3. Vorrichtung nach Anspruch 1, welche eine Mehrzahl der dünnwandigen Abschnitte (7) enthält, die symmetrisch angeordnet und von unterschiedlichen Formen sind.

4. Vorrichtung nach irgendeinem der Ansprüche 1 bis 3, in welcher die Einrichtung für Mittel- bis Hochfrequenz (17) eine Nicht-Kreisform mit einem - bei Betrachtung in der Haupteintrittsrichtung einer Vibration (X) - in seinem Umfangsbereich vorgesehenen und dem dünnwandigen Abschnitt (7) benachbarten Ausschnitt (21) aufweist, wobei ein Zwischenraum (d1) zwischen dem Ausschnitt und dem Dünnwandabschnitt vorgesehen ist, welcher größer ist als an anderen Stellen.

5. Vorrichtung nach irgendeinem der vorhergehenden Ansprüche, in welcher die Trennwand eine elastische Trennwand (31) ist, welche so eingerichtet ist, dass sie ihre dynamische Federcharakteristik nach Maßgabe einer Innendruckänderung in der Flüssigkeitskammer (11) verändert.

6. Vorrichtung nach irgendeinem der Ansprüche 1 bis 4, in welcher die Trennwand (44) eine Mehrzahl von Mündungsdurchgängen (46, 47) aufweist, welche verschiedene Eigenschaften zur Schaltung bei bestimmten Frequenzen aufweisen.

7. Vorrichtung nach Anspruch 6, welche ferner einen Öffnungs- und Schließabschnitt (51) zum Schalten der Mündungsdurchgänge (46, 47) aufweist, die an einem Teil einer eine Nebenkammer (12) umfassenden Membran (50) ausgebildet sind, und einen Antriebsabschnitt (42) zum Öffnen und Schließen der Öffnungsund Schließabschnitte aufweist, und in welcher ein zylindrisches Metallabdeckelement (8) zum Abdecken eines Umfangs eines elastischen Elements bereitgestellt ist, das an seinem offenen Ende erste (63a) und zweite (68a) Krallen verschiedener Höhen aufweist, wobei ein erster Verstemmabschnitt (63) die Trennwand und die Membran durch Verstemmen mit der ersten Kralle befestigt und ein zweiter Verstemmabschnitt (68) einen Antriebsabschnitt durch Verstemmen mit der zweiten Kralle befestigt.

8. Vorrichtung nach Anspruch 7, in welcher der Antriebsabschnitt (42) umfasst: einen oberen Abschnitt (54a), welcher an dem Öffnungsund Schließabschnitt (51) anliegt, ein zylindrisches Membranelement (61), welches an seinem Ende mit einem Außenumfangsabschnitt des oberen Abschnitts vereinigt ist, um eine Bewegung des oberen Abschnitts zu erlauben, einen Befestigungsring (60), welcher mit einem anderen Ende des Membranabschnitts vereinigt ist, sowie ein topfartiges Element (57), welches an dem Befestigungsring angebracht ist, wobei an dem zylindrischen Abdeckelement ein Positionierring (64) bereitgestellt ist, um ein Ende desselben durch einen ersten Verstemmabschnitt (63) zu befestigen, und ein oberer Abschnitt dieses Positionierrings in Anlage gegen einen Teil des elastischen Elements des Ringabschnitts gebracht ist, welcher den Befestigungsring abdeckt, nachdem er in das topfartige Element eingeführt ist, wobei ein Öffnungsrandabschnitt des topfartigen Elements durch einen zweiten Verstemmabschnitt (68) so befestigt ist, dass ein Zwischenraum zwischen dem Öffnungsrandabschnitt des topfartigen Elements und dem ersten Verstemmabschnitt ausgebildet ist.

9. Vorrichtung nach Anspruch 8, in welcher der Befestigungsring (60) einen Abschnitt mit kleinem Durchmesser (60a) und einen Abschnitt mit großem Durchmesser aufweist, wobei zwischen einer Außenumfangsfläche des Abschnitts mit großem Durchmesser und einer Innenumfangsfläche des topfartigen Elements (57) ein Zwischenraum ausgebildet ist, wobei an einem Außenumfangsabschnitt des Abschnitts mit kleinem Durchmesser ein Außenumfangsabdeckabschnitt (61a) bereitgestellt ist, welcher durch einen Teil des elastischen Elements des Ringabschnitts gebildet und mit einer Innenumfangsfläche des topfartigen Elements in Kontakt gebracht ist, wobei eine erste Dichtlippe (62a) von dem Außenumfangsabdeckabschnitt vorsteht und gegen eine Innenumfangsfläche des topfartigen Elements gedrückt wird und wobei eine zweite Dichtlippe (62b) von dem elastischen Element des Ringabschnitts nahe einem Endabschnitt des Befestigungsrings vorsteht und gegen einen Bodenabschnitt des topfartigen Elements gedrückt wird.

10. Vorrichtung nach Anspruch 9, in welcher an einem Teil des Positionierrings (64) ein Abschnitt kleinen Durchmessers bereitgestellt ist, um zwischen der Innenumfangsfläche des topfartigen Elements (57) einen vollständigen Umfangszwischenraum zu bilden, und wobei durch den Zwischenraum ein Luftöffnungsloch (72) in dem topfartigen Element bereitgestellt ist, welches mit einem Raum zwischen der Membran (50) und dem Antriebsabschnitt (52) in Verbindung steht.

## Revendications

1. Dispositif de montage élastique du type à joint hydraulique, comprenant :
un premier élément de support (1) permettant la fixation sur une source de vibrations ;
un second élément de support (2) permettant la fixation sur une carrosserie de véhicule ;
un élément élastique (3) ayant une forme sensiblement conique intercalé entre lesdits premier et second éléments de support, le premier élément de support et le second élément de support étant conçus pour former, entre eux, une chambre liquide, avec au moins une partie d'une paroi de celle-ci, et une portion de paroi mince (7) étant formée sur une partie d'une portion conique de l'élément élastique ;
**caractérisé en ce que**
une paroi de séparation (10, 31, 44) divise la chambre liquide en une chambre liquide principale (11) et une chambre liquide auxiliaire (12) ;
un passage à orifices (14) est formé à l'intérieur de la paroi de séparation afin de faire communiquer, normalement, les deux chambres liquides ;
une partie de la paroi définissant ladite chambre liquide auxiliaire a la forme d'un diaphragme (9) ;
un dispositif à moyenne à haute fréquence (17) est fourni, qui est fixé sur ledit premier élément de support et fait saillie dans la chambre liquide principale, de façon à absorber une composante de vibration de moyenne à haute fréquence, en formant une chambre d'écoulement (18) entre lui-même et la paroi interne de la portion conique (4) de l'élément élastique, et la portion de paroi mince (7) est formée sur la partie de la portion conique dudit élément élastique adjacente au dispositif à moyenne à haute fréquence, de façon à générer une résonance de membrane via une entrée de vibration dans la gamme moyenne à haute fréquence.

2. Dispositif selon la revendication 1, comprenant une pluralité desdites parties de paroi minces (7) agencées de manière symétrique et ayant la même forme.

3. Dispositif selon la revendication 1, comportant une pluralité desdites parties de paroi minces (7) agencées de manière symétrique et ayant des formes différentes.

4. Dispositif selon l'une quelconque des revendications 1 à 3, dans lequel ledit dispositif à moyenne à haute fréquence (17) est de forme non-circulaire avec une portion découpée (21) adjacente à ladite portion de paroi mince (7) dans une partie périphérique de celle-ci, si on le regarde dans la direction d'entrée principale d'une vibration (X), un interstice (d1) étant fourni entre ladite portion découpée et ladite portion à paroi mince, qui est plus grande qu'à d'autres emplacements.

5. Dispositif selon l'une quelconque des revendications précédentes, dans lequel ladite paroi de séparation est une paroi de séparation élastique (31) agencée pour modifier la caractéristique de dynamique de ressort de celle-ci, selon la modification de la pression interne dans la chambre liquide (11).

6. Dispositif selon l'une quelconque des revendications 1 à 4, dans lequel ladite paroi de séparation (44) présente une pluralité de passages à orifices (46, 47) ayant différentes propriétés pour commuter à des fréquences indiquées.

7. Dispositif selon la revendication 6, comprenant en outre une portion qui s'ouvre et qui se ferme (51) afin de commuter lesdits passages à orifices (46, 47), formés sur une partie d'un diaphragme (50) comprenant une chambre auxiliaire (12), une portion d'entraînement (42) pour ouvrir et fermer lesdites portions qui s'ouvrent et qui se ferment, et dans lequel un élément couvrant cylindrique en métal (8) est fourni pour couvrir une périphérie d'un élément élastique, présentant, sur une extrémité ouverte de celui-ci des première (63a) et seconde (68a) mâchoires de hauteurs différentes, une première portion de calfatage (63) fixant la paroi de séparation et le diaphragme par calfatage avec ladite première mâchoire, et une seconde portion de calfatage (68) fixant une portion d'entraînement par calfatage avec ladite seconde mâchoire.

8. Dispositif selon la revendication 7, dans lequel la portion d'entraînement (42) comprend une portion supérieure (54a) butant contre ladite portion qui s'ouvre et qui se ferme (51), un élément de membrane cylindrique (61) intégré au niveau d'une extrémité de celui-ci dans une portion périphérique externe de ladite portion supérieure pour permettre le mouvement de la portion supérieure, un anneau de fixation (60) intégré dans une autre extrémité de la portion de membrane, et un élément semblable à une coupelle (57) fixé sur l'anneau de fixation, dans lequel, sur l'élément couvrant cylindrique, un anneau de positionnement (64) est fourni pour fixer une extrémité de celui-ci grâce à une première portion de calfatage (63), et une portion de bout de cet anneau de positionnement bute contre une partie de l'élément élastique de la portion d'anneau couvrant l'anneau de fixation après avoir été inséré dans ledit élément semblable à une coupelle, une portion de bord qui s'ouvre dudit élément semblable à une coupelle étant fixée grâce à une seconde portion de calfatage (68), de telle sorte qu'un interstice est formé entre la portion de bord qui s'ouvre de l'élément semblable à une coupelle et la première portion de calfatage.

9. Dispositif selon la revendication 8, dans lequel ledit anneau de fixation (60) présente une portion à petit diamètre (60a) et une portion à grand diamètre, un interstice est formé entre une face de périphérie externe de la portion à grand diamètre et une face de périphérie interne dudit élément semblable à une coupelle (57), sur une portion de périphérie externe de la portion à petit diamètre, une portion couvrant la périphérie externe (61a) est fournie, qui est formée grâce à une partie de l'élément élastique de la portion d'anneau et mise en contact avec une face de périphérie interne de l'élément semblable à une coupelle, un premier joint à lèvre (62a) faisant saillie depuis la portion couvrant la périphérie externe et étant appuyé contre une face de périphérie interne de l'élément semblable à une coupelle, et un second joint à lèvre (62b) faisant saillie depuis l'élément élastique de la portion d'anneau, près d'une portion d'extrémité de l'anneau de fixation et étant appuyé contre une portion inférieure de l'élément semblable à une coupelle.

10. Dispositif selon la revendication 9, dans lequel sur une partie de l'anneau de positionnement (64), une portion à petit diamètre est fournie pour former un interstice sur l'intégralité de la circonférence, entre la face de périphérie interne dudit élément semblable à une coupelle (57) et, à travers l'interstice, un orifice d'ouverture sur l'atmosphère (72) est fourni dans l'élément semblable à une coupelle, qui communique avec un espace entre le diaphragme (50) et la portion d'entraînement (42).
